## Europäisches Patentamt

## European Patent Office

## Office européen des brevets

(11) Veröffentlichungsnummer: **0 151 662**

**A1**

(12) **EUROPÄISCHE PATENTANMELDUNG**

(21) Anmeldenummer: **84101486.3**

(22) Anmeldetag: **14.02.84**

(51) Int. Cl.⁴: **A 23 F 3/30**

(43) Veröffentlichungstag der Anmeldung:
**21.08.85 Patentblatt 85/34**

(84) Benannte Vertragsstaaten:
**AT BE CH DE FR GB IT LI LU NL SE**

(71) Anmelder: **Grübner, Kurt**
**Birkenhainer Strasse**
**D-6464 Linsengericht-Waldrode(DE)**

(72) Erfinder: **Grübner, Kurt**
**Birkenhainer Strasse**
**D-6464 Linsengericht-Waldrode(DE)**

(74) Vertreter: **Munderich, Paul, Dipl.-Ing.**
**Frankfurter Strasse 84**
**D-6466 Gründau-Rothenbergen(DE)**

(54) **Instant-Pulver zur Herstellung von Kiwi-Tee.**

(57) Die Erfindung betrifft ein Instant-Pulver zur Herstellung von Kiwi-Eistee, das beispielsweise durch Sprüh- bzw. Zerstäubungstrocknung oder Gefriertrocknung von zubereitetem Tee gewonnen wird.

Aufgabe ist es, ein neuartiges Getränk auf der Basis von Schwarztee zu schaffen.

Die Lösung dieser Aufgabe erfolgt durch ein Instant-Pulver zur Herstellung von Kiwi-Eistee in der folgenden Zusammensetzung:

0,1 bis 3,0 Gew.-% Schwarztee-Extrakt,

0,2 bis 5,0 Gew.-% Kiwi-Pulver,

0,2 bis 5,0 Gew.-% Zitronensäure,

Rest Rohrzucker und Traubenzucker im Gewichtsverhältnis 80:20 bis 50:50 Gew.-Teile, wobei gegebenenfalls der Zusatz künstlichen Süßstoffes vorsehbar ist.

Durch den weiteren Zusatz von Natriumbicarbonat von 0,1 bis 5,0 Gew.-% ergibt sich ein sprudelndes, besonders erfrischendes Getränk, das durch Zugabe von entsprechenden Geschmacksstoffen zum Beispiel den Eindruck eines Champagnerzusatzes hervorruft.

Die vorliegende Erfindung betrifft ein Instant-Pulver zur Herstellung von Kiwi-Eistee.

Schwarztee ist seit alters her als anregendes Getränk in Gebrauch. In neuer Zeit ist schwarzer Tee auch in Form von Instantzubereitungen, beispielsweise in Form von Instant-Pulvern, in den Handel gekommen. Instant-Pulver werden im Allgemeinen durch Trocknung von zubereitetem Tee gewonnen, beispielsweise durch Sprüh- bzw. Zerstäubungstrocknung oder Gefriertrocknung. Instant-Pulver von schwarzem Tee ist auch mit Zusätzen von Zitrone, beispielsweise in Form von Zitronenpulver, im Handel. Zitronensaft wird schwarzem Tee bevorzugt als Säuerungsmittel und Vitaminspende zugesetzt.

Aufgabe der vorliegenden Erfindung ist es, ein neuartiges Getränk auf der Grundlage von Schwarztee zu schaffen, das sich leicht zubereiten läßt.

Gelöst wird diese Aufgabe durch ein Instant-Pulver zur Herstellung von Kiwi-Eistee mit der folgenden Zusammensetzung:

0,1 bis 3,0 Gew.-% Schwarztee-Extrakt,
0,2 bis 5,0 Gew.-% Kiwi-Pulver,
0,2 bis 5,0 Gew.-% Zitronensäure,
Rest Rohrzucker und Traubenzucker im Gewichtsverhältnis 80:20 bis 50:50 Gew.-Teile,
gegebenenfalls mit Zusatz von künstlichen Süßstoffen.

Bevorzugt hat das Pulver folgende Zusammensetzung:

0,2 bis 2,0 Gew.-% Schwarztee-Extrakt,
0,5 bis 3,0 Gew.-% Kiwi-Pulver,
0,5 bis 3,0 Gew.-% Zitronensäure,
Rest Rohrzucker und Traubenzucker im Gewichtsverhältnis 70:30 bis 50:50.

Das Pulver kann auch einen Zusatz von 0,1 bis 5,0 Gew.-% Natriumbicarbonat, bevorzugt von 0,1 bis 3,0 Gew.-% Natriumbicarbonat, enthalten.
Dieses Natriumbicarbonat reagiert mit den in dem Instant-Pulver enthaltenen Säuren, insbesondere mit der Zitronensäure, unter Bildung von Kohlendioxyd. Dadurch ergibt sich ein sprudelndes und besonders erfrischendes Getränk. Durch Zugabe entsprechender Geschmacksstoffe läßt sich ein Instantpulver für ein Teegetränk herstellen, das den Eindruck eines Champagnerzusatzes hervorruft.

Das in den erfindungsgemäßen Instant-Pulvern eingesetzte Kiwi-Pulver wird aus Kiwifrüchten gewonnen, beispielsweise durch Sprühtrocknung oder Gefriertrocknung.

Die Kiwifrüchte stammen ursprünglich aus China, sie waren früher unter dem Namen "Chinesische Stachelbeere" bekannt. Sie weisen einen hohen Vitamingehalt auf, insbesondere an Vitamin A, C und D. Eine einzige Kiwifrucht kann bis zu 380 mg Vitamin C enthalten, was annähernd dem Tagesbedarf eines erwachsenen Menschen entspricht. Außerdem sind Kiwifrüchte reich an Mineralstoffen, wie Kalium und Eisen.

Als Trägerstoff für das Pulver wird ein Gemisch von Traubenzucker und Rohrzucker im Gewichtsverhältnis Rohrzucker:Traubenzucker von 80:20 bis 50:50 Gew.Teile bevorzugt von 70:30 bis 50:50 Gew.Te, verwendet. Für Diabetiker kann beispielsweise Rohrzucker und Traubenzucker durch Zuckeraustauschstoffe, wie z. B. Sorbit, gegebenenfalls mit Zusatz von künstlichen Süßstoffen, ersetzt werden.

Die Anwendung des erfindungsgemäßen Instant-Pulvers erfolgt derart, daß die für die Herstellung eines Getränkes mit der gewünschten Geschmacksstärke erforderliche Menge des Instant-Pulvers in Wasser gelöst wird. Die für ein schmackhaftes Teegetränk erforderliche Menge liegt dabei zwischen etwa 10 g und etwa 300 g pro Liter Wasser. Sie kann entsprechend der im Instant-Pulver enthaltenen Menge der Trägerstoffe, wie Rohrzucker, Traubenzucker usw. schwanken. Bevorzugt werden Mengen von 20 bis 200 g pro Liter Wasser, besonders bevorzugt von 50 bis 150 g pro Liter Wasser, verwendet. Dem Getränk werden dann nach Wunsch Eiswürfel zugegeben, es wird dann nach Wunsch mit Zitronen- oder Orangenscheiben garniert serviert.

Die Herstellung des Instant-Pulvers erfolgt durch Vermischen der trockenen Komponenten in einem für solche Lebensmittelpulver geeigneten Mischer.

Die für den aromatischen Geschmackseindruck des Instant-Pulvers wesentlichen Komponenten sind das Schwarztee-Extrakt und das Kiwi-Pulver.

Überraschenderweise ergibt sich beim Vermischen dieser Komponenten mit den übrigen Bestandteilen des Instant-Pulvers nicht eine bloße Überlagerung des Schwarztee-Geschmacks mit dem Kiwi-Pulver-Geschmack, sondern es ergibt sich eine überraschende Geschmacksnuance, die etwa in Richtung Erdbeere, Himbeere liegt. Trotzdem bleibt aber das typische Kiwi-Aroma, das dem der Stachelbeere ähnelt, erhalten.

Die Erfindung wird nachfolgend durch Beispiele näher erläutert.

Beispiel 1:
In einem Mischer werden die folgenden Bestandteile in trockener Form vermischt:
0,6 Gew.-% Schwarztee,
1,5 Gew.-% Kiwi-Pulver,
1,5 Gew.-% Zitronensäure,
Rest Rohrzucker/Traubenzucker 60:40.

Beim Auflösen von einem gehäuften Eßlöffel des Pulvers in einem halben Liter Wasser ergibt sich ein wohlschmeckendes Kiwi-Teegetränk, dessen Geschmacksrichtung sich als Mischung der Nuance Erdbeere, Himbeere mit der Richtung Kiwifrucht beschreiben läßt.
Das Getränk wird durch Zugabe von Eiswürfeln sowie von Zitronen- oder Orangenscheiben verfeinert.

Beispiel 2:
Der Mischung von Beispiel 1 werden zusätzlich 2 Gew.-% Natriumbicarbonat zugesetzt. Beim Auflösen dieser Pulvermischung in einer Menge von einem gehäuften Eßlöffel auf einen halben Liter Wasser ergibt sich ein wohlschmeckendes Getränk der Geschmacksnuance Erdbeere, Himbeere mit Kiwi plus Champagner.
Das Getränk wird durch Zugabe von Eiswürfeln und Zitronen- bzw. Orangenscheiben weiter verfeinert.

## Patentansprüche

1. Instantpulver zur Herstellung von Kiwi-Eistee, dadurch gekennzeichnet,

   d a ß   es
   0,1 bis 3,0 Gew.-% Schwarztee-Extrakt,
   0,2 bis 5,0 Gew.-% Kiwi-Pulver,
   0,2 bis 5,0 Gew.-% Zitronensäure,
   Rest Rohrzucker und Traubenzucker im Gewichtsverhältnis 80:20 bis 50:50 Gew.- Teile, gegebenenfalls   mit Zusatz von künstlichen Süßstoffen, enthält.

2. Instant-Pulver nach Anspruch 1, dadurch gekenn- zeichnet,

   d a ß   es
   0,2 bis 2,0 Gew.-% Schwarztee-Extrakt,
   0,5 bis 3,0 Gew.-% Kiwi-Pulver,
   0,5 bis 3,0 Gew.-% Zitronensäure,
   Rest Rohrzucker und Traubenzucker im Gewichtsverhältnis 70:30 bis 50:50 enthält.

3. Instant-Pulver nach Anspruch 1, dadurch gekennzeichnet,

   daß es
   0,6 Gew.-% Schwarztee,
   1,5 Gew.-% Kiwi-Pulver,
   1,5 Gew.-% Zitronensäure,
   Rest Rohrzucker und Traubenzucker im Gewichtsverhältnis 60 : 40
   enthält.

4. Instant-Pulver nach Anspruch 1, dadurch gekennzeichnet,

   daß es zusätzlich 0,1 bis 0,5 Gew.-% Natriumbicarbonat enthält.

5. Instant-Pulver nach Anspruch 1 und 4, dadurch gekennzeichnet,

   daß es 0,1 bis 3,0 Gew.-% Natriumbicarbonat enthält.

6. Instant-Pulver nach den Ansprüchen 1, 2, 3, 4 oder 5, dadurch gekennzeichnet,

   daß anstelle von Rohrzucker und Traubenzucker für Diabetiker geeignete Zuckeraustauschstoffe, wie z. B. Sorbit, verwendet werden.

**Europäisches Patentamt**

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl. ³) |
|---|---|---|---|
| A | EP-A-0 099 459 (SOC. DES PRODUITS NESTLE) <br> * Beispiele 2,3; Seite 3, Zeilen 10-14 * <br> --- | 1,4,5 | A 23 F 3/30 |
| A | DE-A-3 010 240 (ENDER JUTTA) <br> * Ansprüche 1,4 * <br> --- | 1 | |
| A | FR-A-2 148 431 (SOC. DES PRODUITS NESTLE) <br> * Anspruch 1 * <br> --- | 1 | |
| A | PATENT ABSTRACTS OF JAPAN, Band 7, Nr. 100 (C-164)(1245), 28. April 1983; & JP - A - 58 28229 (NITSUTOU SHIYOKUHIN KOGYO K.K.) 19.02.1983 <br> * Zusammenfassung * <br> --- | 1 | |
| A | US-A-4 235 936 (M. KAHN et al.) <br> * Beispiele 3,4 * <br> --- | 1 | RECHERCHIERTE SACHGEBIETE (Int Cl ³) <br><br> A 23 F <br> A 23 L |
| A | FOOD SCIENCE & TECHNOLOGY ABSTRACTS, Nr. 70010748, 1970; D. ZYLKA: "Actinidia, lonicera and schisandra, three new berry fruits" & ERWERBSOBSTBAU, Band 11, Nr. 10, Seiten 194-196, 1969 <br> * Zusammenfassung * <br> --- | 1 | |

Der vorliegende Recherchenbericht wurde für alle Patentansprüche erstellt.

| Recherchenort | Abschlußdatum der Recherche | Prüfer |
|---|---|---|
| DEN HAAG | 04-10-1984 | DESMEDT G.R.A. |